# EUROPEAN PATENT SPECIFICATION

(11) **EP 2 859 721 B1**
(45) Date of publication and mention of the grant of the patent: **08.08.2018**
(21) Application number: 13727073.2
(22) Date of filing: 18.05.2013
(51) Int. Cl.: H04N 5/76

(54) **A BROADCAST RECEIVING DEVICE ENERGIZED BY A RENEWABLE ENERGY SOURCE**
EIN RUNDFUNKEMPFANGSGERÄT DIE DURCH EINE ERNEUERBARESENERGIEQUELLE FÜHREND IST
DISPOSITIF RECEVANT UNE ÉMISSION, ÉNERGISÉ PAR UNE SOURCE D'ÉNERGIE RENOUVELABLE

(30) Priority: 06.06.2012 TR 201206623
(43) Date of publication of application: 15.04.2015
(73) Proprietor: Arçelik Anonim Sirketi, 34950 Istanbul (TR)
(72) Inventor: ORKUN, Tevfik, 34950 Istanbul (TR); HALU, Cenk, 34950 Istanbul (TR)
(86) International application number: PCT/EP2013/060318
(87) International publication number: WO 2013/182407

(56) References cited:
- EP-A2- 1 916 788
- KR-A- 20100 031 361
- US-A- 5 793 627
- US-A1- 2009 054 100

## Description

The present invention relates to a broadcast receiving device energized by a renewable energy source.

The decreasing energy resources in the world, increasing population and the energy per capita necessitate the efficient usage of limited energy sources and hence making changes in the energy production and distribution systems. As per this necessity, using renewable energy sources for compensating energy requirements becomes widespread. However, energy amount generated by the renewable energy sources generally depends on natural conditions and from time to time the problem of energy inadequacy is encountered in devices energized by renewable energy sources.

In the state of the art Great Britain Patent Application No. GB2483305, an embodiment is disclosed, regarding the controlling of a device energized by a renewable energy source. The said device is controlled by comparing the energy requirements of the device with the energy component supplied by the renewable energy source.

The European Patent Application EP 1 916 788 A describes a broadcast receiver which outputs a warning signal when the amount of remaining battery power is insufficient to perform a scheduled operation. On confirmation of a user, the receiver may optionally record a broadcast only instead of playing it back.

The United States Patent Application US 2009/054100 discloses the monitoring of a battery of a television broadcast reception device and the emission of a warning signal, but not the recording of programs.

The aim of the present invention is the realization of a broadcast receiving device that is energized by a renewable energy source and wherein the user dissatisfaction that can be encountered due to the inadequacy of the energy supplied is minimized.

The aim of the present invention is attained by a system comprising a broadcast receiving device and a renewable energy source according to claim 1. Expedient embodiments result from the dependent claims.

In the broadcast receiving device realized in order to attain the aim of the present invention, the control unit controls the operation of the recording unit according to the energy amount supplied by the renewable energy source. According to an embodiment not belonging to the invention, if a storage unit is being charged by the renewable energy source, the control unit controls the operation of the recording unit according to the charge amount of the said storage unit. According to the invention, it is provided that the customer dissatisfaction that can be encountered due to the inadequate charge of the renewable energy source is minimized.

According to the present invention, a limit energy amount is determined by the producer for the energy amount supplied by the renewable energy source. The control unit provides the recording of the program when the energy amount supplied is lower than the limit energy amount. Thus, the risks of the device stopping operating and of the user missing the program being watched due to the inadequacy of the energy amount received from the energy source are eliminated.

In an embodiment not belonging to the present invention, the unused portion of the energy supplied by the energy source is stored in a storage unit. The control unit compares the charge amount of the storage unit with a limit charge amount predetermined by the producer and provides the recording of the program being watched when the charge amount drops below the limit charge amount. Thus, the user dissatisfaction is eliminated, which can be encountered due to the energy amount present in the storage unit not being adequate for the completion of the program watched by the user.

In an embodiment not belonging to the present invention, the control unit compares the remaining time of the program being watched with the remaining program-watching time according to the remaining energy amount in the storage unit. At the end of the comparing process, if the energy amount in the storage unit is found inadequate for the completion of the program, the control unit provides the recording of the program by the recording unit.

In an embodiment of the present invention, the user is informed about the energy status before the starting of the recording process and is recommended that the program be continued to be watched after the program is recorded by means of the recording unit and the limit energy amount is exceeded again. Upon the confirmation of the user, the control unit provides the recording of the program by the recording unit.

In an embodiment of the present invention, the receiver provides the electronic program guide (EPG) data to be received along with the broadcast. In this embodiment, the control unit provides the EPG data to be saved in the memory in order to be stored in the event information table (EIT), and the memory to be updated regularly in accordance with the EPG data received from the receiver.

According to the present invention, the broadcast receiving device is a television comprising a display providing the program to be watched, and upon providing the recording of the program being watched by the recording unit according to the energy amount supplied by the renewable energy source or, in the case of the embodiment not belonging to the invention, by the charge amount of the storage unit while a program is being watched, the control unit switches off the display as well and provides efficient utilization of energy.

In another embodiment not belonging to the present invention, the broadcast receiving device is a set-top box without displaying features, and upon providing the recording of the program being watched by the recording unit according to the energy amount supplied by the renewable energy source or the charge amount of the storage unit while a program is being watched, the control unit changes the broadcast receiving device to the stand-by mode as well and provides efficient utilization of energy.

In different embodiments of the present invention, the renewable energy source is supplied with renewable energy types such as solar, wind, etc.

The broadcast receiving device realized in order to attain the aim of the present invention is illustrated in the attached figures, where:

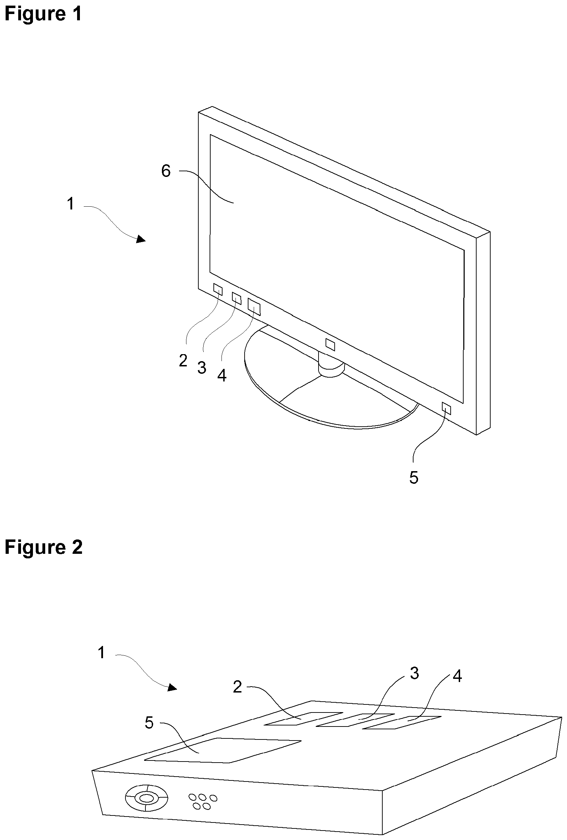

Figure 1 - is the schematic view of the broadcast receiving device in an embodiment of the present invention.
Figure 2 - is the schematic view of the broadcast receiving device in an embodiment not belonging to the present invention.

The elements illustrated in the figures are numbered as follows:
1. Broadcast receiving device
2. Receiver
3. Recording unit
4. Control unit
5. Memory
6. Display

The abbreviations related to the supplementary elements used in explicating the present invention are given below:
ES : Renewable energy source
EQ: Energy amount supplied by the energy source
SU: Energy storage unit
CS: Charge amount of the energy storage unit
LE: Limit energy amount
LC: Limit charge amount determined by the producer
Δtₚ: Remaining time of the program being watched
Δt_{c}: Remaining program-watching time according to the charge amount of the energy source

The broadcast receiving device (1) of the present invention is energized by a renewable energy source (ES) and comprises at least one receiver (2) providing the broadcast to be received, a recording unit (3) providing the broadcast to be recorded and a control unit (4) controlling the operation of the recording unit (3) according to the energy amount (EQ) supplied by the renewable energy source (ES). In an embodiment not belonging to the present invention, the control unit (4) controls the operation of the recording unit (3) according to the charge amount (CS) of an energy storage unit (SU) connected to the renewable energy source (ES).

According to the present invention, the control unit (4) provides the recording of the program being watched by the recording unit (3) when the energy amount (EQ) supplied by the renewable energy source (ES) drops below a limit energy amount (LE) predetermined by the producer. Thus, problems that the user may encounter during watching due to inadequate energy are prevented.

In an embodiment not belonging to the present invention, the control unit (4) provides the recording of the program being watched by the recording unit (3) when the charge amount (CS) of the storage unit (SU) connected to the renewable energy source (ES) drops below a limit charge amount (LC) predetermined by the producer. Thus, user satisfaction is guaranteed by performing the program recording process, which causes less energy consumption than watching the program which causes higher energy consumption while the charge amount (CS) of the storage unit (SU) is low.

In an embodiment not belonging to the present invention, the control unit (4) compares the remaining time (Δtₚ) of the program being watched with the remaining program-watching time (Δt_{c}) according to the charge amount (CS) of the storage unit (SU) and, if the charge amount (CS) of the storage unit (SU) is not sufficient for the completion of the program (Δt_{c} < Δtₚ), provides the recording of the program being watched by the recording unit (3). Thus, user satisfaction is guaranteed by performing the program recording process, which causes less energy consumption than watching the program which causes higher energy consumption while the charge amount (CS) of the storage unit (SU) is low.

In an embodiment of the present invention, the control unit (4) informs the user that the energy amount (EQ) supplied by the renewable energy source (ES) or, in the case of the embodiment not belonging to the invention, the charge amount (CS) of an energy storage unit (SU) connected to the renewable energy source (ES) is not sufficient before the recording process starts and recommends that the program being watched be recorded by the recording unit (3) and be watched after the limit energy amount (LE) is exceeded again. Thus, the recording process is provided to be realized in control of the user.

In an embodiment of the present invention, the receiver (2) provides the electronic program guide (EPG) data to be received along with the broadcast. In this embodiment, the broadcast receiving device (1) comprises a memory (5) wherein the EPG data are saved to be stored in the event information table (EIT). In this embodiment, the control unit (4) provides the EPG data to be saved in the EIT and to be updated regularly in accordance with the EPG data received from the receiver (2).

According to the present invention, the broadcast receiving device (1) is a television comprising a display (6) that provides the program to be watched. Upon providing the recording of the program being watched by the recording unit (3) according to the energy amount (EQ) supplied by the renewable energy source (ES) or, in the case of the embodiment not belonging to the invention, according to the charge amount (CS) of the storage unit (SU) while a program is being watched, the control unit (4) switches off the display (6) as well.

In another embodiment not belonging to the present invention, the broadcast receiving device (1) is a set-top box without displaying features. Upon providing the recording of the program being watched by the recording unit (3) according to the energy amount (EQ) supplied by the renewable energy source (ES) or the charge amount (CS) of the storage unit (SU) while a program is being watched, the control unit (4) changes the broadcast receiving device (1) to the stand-by mode as well.

In an embodiment of the present invention, the renewable energy source (ES) is supplied with solar energy.

In another embodiment of the present invention, the renewable energy source (ES) is supplied with wind energy.

By means of the broadcast receiving device (1), in situations wherein the energy supplied by the renewable energy source (ES) is not sufficient while the desired programs are being watched or, in the case of the embodiment not belonging to the invention, the energy supplied by the renewable energy source (ES) and stored in the storage unit (SU) is depleted, watching experience is prevented from being adversely affected, thus minimizing user dissatisfaction.

## Claims

1. A system comprising a broadcast receiving device (1) and a renewable energy source (ES),
wherein the broadcast receiving device (1) is a television comprising a display (6) that provides the program to be watched, the broadcast receiving device (1) being energized by the renewable energy source (ES) and comprising at least one receiver (2) receiving a broadcast to be received, a recording unit (3) recording a broadcast to be recorded, and a control unit (4),
wherein the control unit (4) is provided for controlling the operation of the recording unit (3) according to an energy amount (EQ) supplied by the renewable energy source (ES),
wherein the control unit (4) causes the recording unit (3) to record the program being watched when the energy amount (EQ) supplied by the renewable energy source (ES) drops below a limit energy amount (LE) predetermined by the producer of the broadcast receiving device (1), and
wherein the control unit (4) switches off the display (6) as well upon causing the recording unit (3) to record the program being watched according to the energy amount (EQ) supplied by the renewable energy source (ES).

2. A system as in Claim 1, **characterized in that** the control unit (4) informs the user that the energy amount (EQ) supplied by the renewable energy source (ES) is not sufficient before the recording process starts and that recommends that the program being watched be recorded by the recording unit (3) and be watched after the limit energy amount (LE) is exceeded again, and upon the confirmation of the user, that provides the recording of the program by the recording unit (3).

3. A system as in any one of the above claims, **characterized in that** the receiver (2) provides the electronic program guide (EPG) data to be received along with the broadcast, and by a memory (5) wherein the EPG data are saved to be stored in the event information table (EIT).

## Patentansprüche

1. System umfassend ein Sendungemfangsgerät (1) und eine erneuerbare Energiequelle (ES),
wobei das Sendungempfangsgerät (1) ein Fernseher ist, der eine Anzeige (6) umfasst, die das zu beobachtende Programm bereitstellt, wobei das Sendungempfangsgerät (1) durch die erneuerbare Energiequelle (ES) mit Energie versorgt wird und mindestens einen Empfänger (2), der die zu empfangende Sendung empfängt, einer Aufnahmeeinheit (3), die eine aufzunehmende Sendung aufnimmt, und einer Steuereinheit (4),
wobei die Steuereinheit (4) zum Steuern des Betriebs der Aufnahmeeinheit (3) gemäß einer Energiemenge (EQ) die von der erneuerbaren Energiequelle (ES) geliefert wird, vorgesehen ist,
wobei die Steuereinheit (4) die Anzeige ausschaltet, wenn die Aufnahmeeinheit (3) veranlasst wird, das betrachtete Programm, wenn der Energiemenge (EQ), der von der erneuerbaren Energiequelle (ES) unterhalb einer Grenz-Energiemenge (LE) fällt, die vom Hersteller des Sendungempfangsgeräts (1) vorgegeben wird, und
wobei die Steuereinheit (4) die Anzeige (6) ausschaltet, auch wenn die Aufnahmeeinheit (3) veranlasst wird, das betrachtete Programm gemäß der von der erneuerbaren Energiequelle (ES) gelieferten Energiemenge (EQ) aufzunehmen.

2. System nach Anspruch 1, **dadurch gekennzeichnet, dass** die Steuereinheit (4) bevor der Aufzeichnungsprozess beginnt den Benutzer informiert, dass die von der erneuerbaren Energiequelle (ES) gelieferte Energiemenge (EQ) nicht ausreichend ist, und das empfehlt, dass das Programm von der Aufnahmeeinheit (3) aufgenommen wird und nach dem Überschreiten der Grenz-Energiemenge (LE) und nach der Bestätigung des Benutzers, der die Aufnahme des Programms durch die Aufnahmeeinheit (3) vornimmt, erneut betrachtet wird.

3. System, nach einem der vorangehenden Ansprüche **dadurch gekennzeichnet, dass** der Empfänger (2) dem elektronischen Programmführer (EPG) zu empfangende Daten zusammen mit der Sendung und durch einen Speicher (5) bereitstellt, wobei die EPG-Daten gespeichert werden, um in der Ereignisinformationstabelle (EIT) gespeichert zu werden.

## Revendications

1. Système comprenant un dispositif de réception de diffusion (1) et une source d'énergie renouvelable (ES),
dans lequel le dispositif de réception de diffusion (1) est une télévision comprenant un écran (6) qui fournit le programme à regarder, le dispositif de réception de diffusion (1) étant excité par la source d'énergie renouvelable (ES) et comprenant au moins un récepteur (2) recevant une émission à recevoir, une unité d'enregistrement (3) enregistrant une diffusion à enregistrer, et une unité de commande (4),
dans lequel l'unité de commande (4) est prévue pour commander le fonctionnement de l'unité d'enregistrement (3) en fonction d'une quantité d'énergie (EQ) fournie par la source d'énergie renouvelable (ES),
dans lequel l'unité de commande (4) amène l'unité d'enregistrement (3) à enregistrer le programme regardé lorsque la quantité d'énergie (EQ) fournie par la source d'énergie renouvelable (ES) tombe en dessous d'une quantité d'énergie limite (LE) prédéterminée par le producteur de le dispositif de réception de diffusion (1), et dans lequel l'unité de commande (4) éteint également l'écran (6) en amenant l'unité d'enregistrement (3) à enregistrer le programme regardé en fonction de la quantité d'énergie (EQ) fournie par la source d'énergie renouvelable (ES).

2. Système selon la revendication 1, **caractérisé en ce que** l'unité de commande (4) informe l'utilisateur que la quantité d'énergie (EQ) fournie par la source d'énergie renouvelable (ES) n'est pas suffisante avant le début du processus d'enregistrement et qui recommande que le programme regarde soit enregistré par l'unité d'enregistrement (3) et soit regardé après que la quantité d'énergie limite (LE) soit à nouveau dépassée, et lors de la confirmation de l'utilisateur, qui fournit l'enregistrement du programme par l'unité d'enregistrement (3).

3. Système selon l'une quelconque des revendications précédentes, **caractérisé en ce que** le récepteur (2) fournit les données de guide de programme électronique (EPG) à recevoir avec la diffusion, et par une mémoire (5) dans laquelle les données EPG sont enregistrées être stocké dans la table d'informations sur les événements (EIT).
